# EUROPEAN PATENT APPLICATION

(11) **EP 4 768 458 A1**
(43) Date of publication of application: **01.07.2026**
(21) Application number: 24307301.2
(22) Date of filing: 24.12.2024
(51) Int. Cl.: C04B 7/52, C04B 28/04, C04B 38/02, C04B 40/00

(54) **METHOD OF PRODUCTION OF A MINERAL FOAM OBTAINED FROM A FOAMING SLURRY OF HIGH YIELD STRESS**

(71) Applicant: Holcim Technology Ltd., 6300 Zug (CH)
(72) Inventor: DALAS, Florent, 38070 SAINT QUENTIN FALLAVIER (FR); GEORGES, Sébastien, 38070 SAINT QUENTIN FALLAVIER (FR); SERVE, Florent, 38070 SAINT QUENTIN FALLAVIER (FR)
(74) Representative: Regimbeau

(57) **Abstract**

The invention relates to a method for the production of a mineral foam comprising the following steps:
(i) preparing a cement slurry, comprising:
- a cementitious composition;
- a carboxylic acid or salt thereof selected from the group consisting of a monocarboxylic acid comprising from 1 to 5 carbon atoms, a dicarboxylic acid comprising from 2 to 5 carbon atoms and mixtures thereof; and
- water;
wherein the carboxylic acid or salt thereof is present in an amount from 0.6% to 2.5%, preferably from 0.6% to 2%, in weight relative to the total dry weight of the cementitious composition,
(ii) adding to the cement slurry obtained after step (i) a gas-forming liquid comprising a gas-forming agent to obtain a foaming slurry;
(iii) applying the foaming slurry obtained in step (ii) on a support.

## Description

### FIELD OF THE INVENTION

The invention refers to a method for producing a mineral foam of excellent stability. The mineral foam of the present invention is particularly suitable for placing on vertical surfaces or for filling cavities, for example as a layer of thermal insulation on walls or an insulating material in a construction.

### BACKGROUND OF THE INVENTION

Mineral foams, also named cement foam, combine advantageous properties such as very low specific weight compared to traditional concrete or other building materials.

Mineral foams comprise a network of bubbles more or less distant from each other that are gas pockets contained in a solid envelope of mineral binder. Due to the pores or empty spaces that it comprises, it is a material that is significantly lighter than traditional concrete. Mineral foams can be produced by mixing two liquid components, i.e. a cement slurry and a liquid containing a gas-forming agent, to obtain a foaming slurry which expands to form a foamed slurry and then sets and hardens to become said mineral foam. The expansion is the direct consequence of the formation of bubbles upon mixing of the two liquids.

The production of a mineral foam involves a step of production of foaming slurry which must be stable. The setting of the liquid foam into solid foam is delicate. The phenomena of destabilisation of the foams during setting, such as for example coalescence, Ostwald ripening or drainage must therefore be controlled notably by the production method.

One of the difficulties in production of mineral foams in an industrial context, either when the production method is a continuous method or when the production method is a per batch method, is to produce a stable foam offsetting these destabilisation phenomena.

In addition, when mineral foams are used as insulating materials, it is advantageous that the foaming slurry can be projected onto a support, notably a vertical surface, or to fill cavities, in particular complex cavities. When the slurry is projected on a support, it becomes essential that the foaming slurry adheres to this support and that it remains integral with this support up to its solidification. Indeed, when the foam is in its liquid state, it can flow under the effect of gravity and it is important that once on its support, said foam does not flow or does not fall under the effect of gravity. When the slurry is used to fill cavities, it is also important that it fills the whole volume of the cavity, especially interstice or gap or unevenness.

Expansion time is another parameter that is essential, especially when the mineral foam is to be applied on a vertical surface. Ideally, the expansion of the foam is achieved during and/or immediately upon application of the foamed slurry to form a dimensionally stable structure immediately upon application. Once applied to a surface, the foam can continue to expand allowing e.g. to fill irregular gaps or voids more effectively.

Patent application WO 2019/092090 describes a process of preparation of a mineral foam by mixing a cement slurry and a gas-forming liquid comprising a gas-forming agent, the cement slurry comprising a manganese salt, notably manganese chloride as catalyst precursor.

However, the use of such manganese salts as catalyst precursors for gas generation present several disadvantages. Manganese chloride is not only expensive but also associated with health risks and potentially hazardous to human health. Additionally, the presence of anions, such as chloride ions, poses environmental challenges, including potential leaching concerns that can limit their use under regulatory frameworks. From an industrial perspective, these salts exacerbate corrosion issues in facilities utilising iron-based materials, further restricting their applicability in certain settings.

The present invention aims to provide a process of preparation of a mineral foam by mixing a cement slurry and a gas-forming liquid comprising a gas-forming agent, said process being more economical, safer for humans and the environment and causing less damage to industrial plants and equipment.

The present invention also aims to provide mineral foams still having excellent stability properties as well as excellent thermal properties, and notably a very low thermal conductivity.

### BRIEF DESCRIPTION OF THE FIGURES

Figure 1 is a diagram illustrating an exemplary embodiment of a device for implementing the method according to the invention
Figure 2 is a diagram illustrating the principle of measuring a contact angle between a drop of water and a surface.
Figure 3 is a diagram of the shear stress as a function of the shear rate illustrating the determination of the cement slurry yield stress.
Figure 4 is a diagram of the shear stress as a function of time illustrating the determination of the foamed slurry yield stress.

### SUMMARY OF THE INVENTION

The invention relates to a method for the production of a mineral foam comprising the following steps:
(i) preparing a cement slurry, comprising:
   - a cementitious composition;
   - a carboxylic acid or salt thereof selected from the group consisting of monocarboxylic acids comprising from 1 to 5 carbon atoms, dicarboxylic acids comprising from 2 to 5 carbon atoms and mixtures thereof; and
   - water;
   wherein the carboxylic acid or salt thereof is present in an amount from 0.6% to 2.5%, preferably from 0.6% to 2%, in weight relative to the total dry weight of the cementitious composition,
(ii) adding to the cement slurry obtained after step (i) a gas-forming liquid comprising a gas-forming agent to obtain a foaming slurry;
(iii) applying the foaming slurry obtained in step (ii) on a support.

Advantageously, the cementitious composition comprises cement and admixtures selected in the group consisting of a mineral addition, ultrafine particles of which the D50 is comprised from 10 to 600 nm, fibres, a water reducing agent and their mixtures.

Preferably, the carboxylic acid or salt thereof is formic acid, acetic acid, propionic acid, oxalic acid or a salt thereof, more preferably formic acid or calcium formate.

In particular, the mineral foam has a density in the dry state from 50 to 200 kg/m³, preferentially from 60 to 170 kg /m³, more preferentially from 70 to 150 kg/m³.

Advantageously, the cement of the cementitious composition is a CEM I Portland cement, preferentially having a Blaine specific surface area above 5000 cm²/g.

Preferably, the gas-forming liquid added in step (ii) comprises the gas-forming agent in a concentration of less than 15 wt.% of the weight of the gas-forming liquid, preferably less than 8 wt.%.

Advantageously, the gas-forming liquid added in step (ii) comprises a solution of hydrogen peroxide, a solution of peroxomonosulphuric acid, a solution of peroxodisulphuric acid, a solution of alkaline peroxides, a solution of alkaline earth peroxides, a solution of organic peroxide, a suspension of particles of aluminium or mixtures thereof, preferably it is a solution of hydrogen peroxide, in particular an aqueous solution of hydrogen peroxide.

Preferably, the gas-forming liquid added in step (ii) further comprises a viscosity-modifying agent, preferably an amphiphilic bio-based polymer, more preferably chosen among methyl cellulose, methylhydroxyethyl cellulose and hydroxypropylmethyl cellulose.

Advantageously, the method is continuous.

Preferably, the support in step (iii) is a wall or a hollow support such as a construction comprising at least one cavity.

The invention also refers to the use of a carboxylic acid or salt thereof selected from the group consisting of monocarboxylic acids comprising from 1 to 5 carbon atoms, dicarboxylic acids comprising from 2 to 5 carbon atoms and mixtures thereof, as a catalyst precursor for facilitating the decomposition of a gas-forming agent in order to form a mineral foam.

Another object of the invention is the mineral foam obtained or obtainable according to the method of the invention.

Another object of the invention is a support coated by the method of the invention, said support being a wall coated with at least one layer of mineral foam or a construction, whose at least one cavity is filled with mineral foam.

Finally, the invention relates to the use of the support coated of the invention for insulation, in particular for thermal or phonic insulation.

### DEFINITIONS

In the present specification, the term "foaming slurry" refers to the mixture of cement slurry and gas-forming liquid, in which the gas-forming agent reacts and forms bubbles that lead to the formation of pores prior to the setting and hardening of the cement. The term "foamed slurry" refers to the mixture of cement slurry and gas-forming liquid, once the gas-forming agent has reacted to form bubbles, and prior to the setting and hardening of the cement. In the present invention, the term "mineral foam" describes the foamed slurry once the cement has set and hardened.

### DETAILED DESCRIPTION OF EMBODIMENTS OF THE INVENTION

It was surprisingly found that a carboxylic acid or salt thereof, selected from the group consisting of monocarboxylic acids comprising from 1 to 5 carbon atoms, dicarboxylic acids comprising from 2 to 5 carbon atoms and mixtures thereof, can be used as a catalyst precursor for facilitating the decomposition of a gas-forming agent instead of the manganese salts of the prior art in a process to form a mineral foam.

The process involves contacting:
- a cement slurry comprising:
   ∘ a cementitious composition;
   ∘ said catalyst precursor; and
   ∘ water,
   wherein the catalyst precursor is present in an amount from 0.6% to 2.5%, preferably from 0.6% to 2% in weight relative to the total dry weight of the cementitious composition; and
- a gas-forming liquid comprising a gas-forming agent.

The process of the invention is more economical, safer for humans and the environment and potentially causes less damage to industrial plants.

Moreover, the mineral foams thus obtained have properties at least comparable to the mineral foams of the prior art obtained with manganese salts.

### Cement slurry of step (i)

The cement slurry comprises:
- a cementitious composition;
- a carboxylic acid or a salt thereof selected in the group consisting of monocarboxylic acids comprising from 1 to 5 carbon atoms, dicarboxylic acids comprising from 2 to 5 carbon atoms and mixtures thereof; and
- water,
said carboxylic acid or salt thereof being present in an amount from 0.6% to 2.5%, preferably from 0.6% to 2% in weight relative to the total dry weight of the cementitious composition.

The cementitious composition may comprise all the components of the cement slurry, except the carboxylic acid or salt thereof and the water used to make the cement slurry.

The cementitious composition may be a dry composition including only dry components.

In the alternative, the cementitious composition may contain some components provided commercially as dispersions, thus comprising a liquid phase. In this case, the amount of carboxylic acid or salt thereof is calculated by taking into account the dry content of the components comprising a liquid phase.

The cementitious composition comprises cement.

Advantageously, the cementitious composition comprises cement and admixtures selected from the group consisting of a mineral addition, ultrafine particles of which the D50 is comprised from 10 to 600 nm, fibres, a water reducing agent and their mixtures.

The cement suitable for producing a mineral foam according to the present invention is preferably a Portland cement.

Portland cement is a mixture of ground Portland clinker, a source of calcium sulphate such as gypsum or anhydrite, optionally mineral components and minor additions, as described in the cement standard NF EN 197-1 published in April 2012.

Preferably, said ground clinker has the following mineralogical composition, in % in weight compared to the total weight of the clinker:
- 50 to 80 wt. % of C3S (alite),
- 4 to 40 wt. % of C2S (belite),
- 0 to 20% wt. of C4AF (ferrite or aluminoferrite or brownmillerite),
- 0 to 15% wt. of C3A (aluminate),
and secondary mineral components.

The mineralogical components of the clinker are noted according to the common cement industry notation:
- C represents CaO,
- A represents Al₂O3,
- F represents Fe₂O₃, and
- S represents SiOz.

All cement types described in the cement standard NF EN 197-1 published in April 2012 (CEM I, CEM II, CEM III, CEM IV, CEM V) may be used for the preparation of the cement slurry. Also, the cement may be a mixture of a CEM I and mineral additions, the mixing being done just prior or during the preparation of the cement slurry.

Preferentially, the cement suitable in the present invention is a CEM I, as described in the cement standard NF EN 197-1 published in April 2012.

Portland cement CEM I comprises at least 95 wt. % of a ground clinker such as described above compared to the total weight of cement.

Advantageously, the cement slurry of the invention comprises from 50 to 60 wt. % of cement compared to the total weight of cement slurry.

In one embodiment of the present invention, the cement is characterized by a Blaine surface of at least 5000 cm²/g. Preferably, the cement is characterized by a Blaine surface comprised from 5000 to 9000 cm²/g.

In particular, the cement is characterized by a Blaine surface of at least 5000 to 8000 cm²/g. Preferably, the cement is characterized by a Blaine surface comprised from 5500 to 8000 cm²/g.

Advantageously, fine cements having a Blaine value of at least 5000 cm²/g preserve the foam properties, while significantly reducing the water demand of the slurry. The use of such cements enables to have a flowable and pumpable cement slurry without requiring the addition of high amounts of water. This has also the advantage of enabling a reduction of the concentration of gas-forming agent in the gas-forming liquid. The cement fineness was also demonstrated to reduce the bubble size.

Advantageously, the cement is a CEM I Portland cement, preferentially having a Blaine specific surface area above 5000 cm²/g.

The cementitious composition of the present invention may further comprise ultrafine particles with a D50 comprised from 10 to 600 nm.

Advantageously, the cement slurry comprises from 0.5 to 10 wt. %, preferably from 1 to 7 wt. % of ultrafine particles compared to the total weight of cement slurry.

Advantageously, the ultrafine particles in the cement slurry of the present invention have a liquid-solid contact angle measured according to the examples below comprised from 30° to 140°, preferably comprised from 40° to 130°, even more preferentially from 70° to 130°. This contact angle is also called wetting angle. The expression "contact angle" or "wetting angle" is taken to mean the angle formed between a liquid/vapour interface and a solid surface. It is the angle formed between the interface of a liquid and the solid surface on which the liquid is deposited. It is generally considered that a surface is hydrophilic when the static contact angle of a drop of water arranged on the surface is less than around 30 degrees and that the surface is hydrophobic at variable hydrophobic levels when the static contact angle of a drop of distilled water arranged on the surfaceis greater than around 30 degrees and less than around 140°. The surface is designated superhydrophobic when the static contact angle of a drop of distilled water arranged on the wall is greater than around 140 degrees. To produce a foam from the method according to the invention, it could be desirable that the ultrafine particles of the mixture of step (i) are not superhydrophobic, that is to say do not have a contact angle strictly greater than 140°.

Preferably, least a part of the accessible surface of the ultrafine particles of the cement slurry is coated or treated with a hydrophobizing surface treatment agent such as, e.g., aliphatic carboxylic acids, salts or esters thereof, or a siloxane. Suitable aliphatic acids are, for example, C5 to C28 fatty acids such as stearic acid, palmitic acid, myristic acid, lauric acid, or a mixture thereof. Such surface treatment may also be referred to as a functionalization.

Preferably, the ultrafine particles of the cement slurry are not hydrophilic.

The ultrafine particles suitable for the cement slurry have a D50 comprised from 10 to 600 nm, preferably comprised from 20 to 500 nm, more preferentially comprised from 30 to 200 nm.

The D50, also noted Dv50, corresponds to the 50^{th} percentile of the volume distribution of the size of particles, that is to say that 50 % of the volume is constituted of particles of which the size is equal or less than the D50 and 50 % of the volume is constituted of particles of which the size is greater than the D50. The D50 can be measured by a laser particle size method described below in the detailed description of embodiments of the invention section. It may be noted that the ultrafine particles generally comprise elementary particles having a diameter comprised from 10 to 50 nm. These elementary particles may agglomerate to form agglomerated particles having a diameter from 40 nm to 150 nm. These agglomerated particles may agglomerate to form aggregates having a diameter from 100 nm to 600 nm. The ultrafine particles suitable for the cement slurry of the invention may come from one or more materials selected from calcareous powders, precipitated calcium carbonates, natural and artificial pozzolans, pumice stones, ground fly ashes, hydrated silica, in particular the products described in the document FR 2708592, and mixtures thereof.

The cementitious composition used within the present invention may further comprise a water reducing agent.

A water reducing agent is a liquid solution that contains a polymer and other chemicals and that enables the reduction by around 10 to 15 % by weight the quantity of mixing water for a given slurry workability and rheology. The solid content of water reducing agents is typically comprised between 15% and 45%. As an example of water reducing agent may be cited lignosulphonates, hydroxycarboxylic acids, carbohydrates, and other specific organic compounds, such as for example glycerol, polyvinyl alcohol, sodium alumino-methyl siliconate, sulphanilic acid and casein (see Concrete Admixtures Handbook, Properties Science and Technology, V.S. Ramachandran, Noyes Publications, 1984).

Plasticizers are the first generation of water reducing agents. The amount of plasticizer generally depends on the cement reactivity. The lower its reactivity is, the lower amount of plasticizer is needed.

Superplasticizers belong to the new generation of water reducing agents and make it possible to reduce by around 30 % by weight the quantity of mixing water for a given workability time. As an example of superplasticizer, it is possible to cite superplasticizers of PCP type that do not contain any antifoaming agent. The term "PCP" or "polycarboxylate polyoxide" is taken to mean according to the present invention a copolymer of acrylic acids or methacrylic acids; and their esters of poly(ethylene oxide) (POE). The amount of superplasticizer generally depends on the cement reactivity. The lower its reactivity is, the lower amount of superplasticizer is needed.

Preferably, the cementitious composition comprises from 0.2 to 2.0 wt. %, more preferentially from 0.5 to 1.5 wt. %, of a water reducing agent compared to the total weight of the cement.

When the water reducing agent is used in solution, the quantity is expressed in active ingredient in the solution.

According to an alternative embodiment of the invention, the cement slurry or the mixture obtained after step (ii) of the present invention does not comprise an antifoaming agent, or any agent having the property of destabilizing air bubbles dispersed in a liquid. Some commercially available superplasticizers may contain antifoaming agents and consequently these superplasticizers are also preferably absent from the cement slurry used to prepare the mineral foam according to the invention.

According to an alternative embodiment of the invention, the cement slurry does not comprise a gas-forming agent.

According to an alternative embodiment of the invention, the cement slurry does not comprise a viscosity-modifying agent.

The cement slurry of step (i) of the method according to the invention may comprise a retarding agent, an accelerating agent or any other additive as defined in the standard NF EN 934-2 of September 2002.

Advantageously, the cementitious composition further comprises fibres.

The presence of fibres in the composition reduces the issues of both delamination and cracking of the mineral foam.

Preferably, the fibres are polypropylene fibres. The fibres preferably have a length of 6 mm or 12 mm. Preferably, the fibres have a diameter of 18 µm.

More preferably, the fibres have a length of 6 mm and a diameter of 18 µm as they show a limited formation of lumps of fibres upon pumping the cement slurry and the foamed slurry. Advantageously, the amount of fibres in the cementitious composition is between 0.2 wt. % and 2 wt. % by weight of cement, preferentially between 0.2 wt. % and 1 wt. %.

According to an alternative embodiment, the cementitious composition further comprises a mineral addition such as pozzolan, slag, calcium carbonate, fly ash, sand or mixtures thereof, and of which the particles have a D50 comprised from 0.1 µm to 4 mm.

Preferably, the cement slurry may comprise from 5 to 50 wt. % of mineral additions, preferably from 10 to 40 wt. %, even more preferably from 10 to 30 wt. %, compared to the total weight of the cement slurry.

The mineral additions suitable for the cement slurry are preferably selected from calcium carbonate, silica, ground glass, solid or hollow glass beads, glass granules, expanded glass powders, silica aerogels, silica fumes, slags, ground sedimentary silica sands, fly ashes or pozzolanic materials or mixtures thereof.

Preferably the D50 of the particles of mineral additions suitable for the cement slurry is comprised from 0.1 to 500 µm, for example from 0.1 to 250 µm, preferably from 0.2 to 500 µm, preferably from 0.25 to 500 µm. The D50 of the mineral particles is preferably from 0.1 to 150 µm, more preferentially from 0.1 to 100 µm, preferably from 0.2 to 150 µm, preferably from 0.25 to 150 µm.

The mineral additions suitable for the cement slurry of the present invention may be pozzolanic materials (for example as defined in the European standard NF EN 197-1 of April 2012 paragraph 5.2.3), silica fumes (for example such as defined in the European standard NF EN 197-1 of April 2012 paragraph 5.2.7), slags (for example as defined in the European standard NF EN 197-1 of April 2012), materials containing calcium carbonate, for example calcareous materials (for example as defined in the European standard NF EN 197-1 paragraph 5.2.6), siliceous additions (for example as defined in the standard "Concrete NF P 18-509"), fly ashes (for example those as described in the European standard NF EN 197-1 of April 2012 paragraph 5.2.4) or mixtures thereof.

A fly ash is generally a powdery particle comprised in the fumes from coal-fired thermal power stations. It is generally recovered by electrostatic or mechanical precipitation. The chemical composition of a fly ash mainly depends on the chemical composition of the coal burned and of the method used in the power plant from which it comes. The same is true for its mineralogical composition. The fly ashes used according to the invention may be of siliceous or calcic nature.

Slags are generally obtained by rapid cooling of the molten slag coming from the melting of iron ore in a blast furnace. Slags suitable for the mixture of step (i) of the method according to the invention may be selected from granulated blast furnace slags according to the European standard NF EN 197-1 of February 2001 paragraph 5.2.2.

Silica fumes may be a material obtained by reduction of high purity quartz by carbon in electric arc furnaces used for the production of silica and ferrosilica alloys. Silica fumes are generally formed of spherical particles comprising at least 85 % by weight of amorphous silica.

Preferably, the silica fumes suitable for the cement slurry of the present invention may be selected from silica fumes according to the European standard NF EN 197-1 of April 2012 paragraph 5.2.7.

Pozzolanic materials may be natural siliceous or silico-aluminous substances, or a combination thereof. Among pozzolanic materials may be cited natural pozzolans, which are in general materials of volcanic origin or sedimentary rocks, and natural calcinated pozzolans, which are materials of volcanic origin, clays, schists or sedimentary rocks, thermally active.

Preferably, the pozzolanic materials suitable for the cement slurry may be selected from pozzolanic materials according to the European standard NF EN 197-1 of April 2012 paragraph 5.2.3.

Preferably, the mineral additions suitable for the cement slurry may be calcareous powders and/or slags and/or fly ashes and/or silica fumes. Preferably, the mineral additions are calcareous powders and/or slags.

Other mineral additions suitable for the cement slurry are calcareous, siliceous or silico-calcareous powders, or mixtures thereof.

Advantageously, the cementitious composition comprises cement, ultrafine particles of which the D50 is comprised from 10 to 600 nm and a water reducing agent.

Advantageously, the cementitious composition comprises Portland cement, ultrafine particles of which the D50 is comprised from 10 to 600 nm and a water reducing agent.

Advantageously, the cementitious composition comprises Portland cement, ultrafine particles of which the D50 is comprised from 10 to 600 nm, fibres and a water reducing agent.

Advantageously, the cementitious composition comprises CEM-I Portland cement, mineral addition, ultrafine particles of which the D50 is comprised from 10 to 600 nm, fibres and a water reducing agent.

Preferably, the cement used for slurry has an initial setting time comprised between 80 and 150 minutes, and a final setting time 150 and 250 minutes at room temperature, also when additional admixtures such as disclosed above, including accelerators or retarders, are added. The setting time is measured according to the standard NF EN 196-3 published in January 2009.

The cement slurry comprises a carboxylic acid or a salt thereof selected from the group consisting of monocarboxylic acids comprising from 1 to 5 carbon atoms, dicarboxylic acids comprising from 2 to 5 carbon atoms and mixtures thereof; said carboxylic acid or salt thereof being present in an amount from 0.6% to 2.5%, preferably from 0.6% to 2% in weight relative to the total dry weight of the cementitious composition.

The monocarboxylic acid can be formic acid or a monocarboxylic acid comprising 2 to 5 carbon atoms.

The monocarboxylic acid can comprise an aliphatic hydrocarbon chain, preferably saturated, linear or branched, optionally substituted or interrupted by one or more heteroatoms.

Advantageously, the monocarboxylic acid comprising 2 to 5 carbon atoms comprises an aliphatic hydrocarbon chain, saturated, linear with 2 to 5 carbon atoms.

The salt of the carboxylic acid can be a salt of a monovalent or polyvalent cation. The monovalent cation can be a sodium or a potassium cation. The polyvalent cation can be a divalent cation, such as a magnesium or a calcium cation.

Advantageously, the monocarboxylic acid salt is a calcium salt.

The dicarboxylic acid can be oxalic acid or a dicarboxylic acid comprising 3 to 5 carbon atoms.

The dicarboxylic acid can comprise an aliphatic hydrocarbon chain, preferably saturated, linear or branched, optionally substituted or interrupted by one or more heteroatoms.

Advantageously, the dicarboxylic acid comprising 3 to 5 carbon atoms comprises an aliphatic hydrocarbon chain, saturated, linear with 3 to 5 carbon atoms.

The salt of the dicarboxylic acid can be a salt of a monovalent or polyvalent cation. The monovalent cation can be a sodium or a potassium cation. The polyvalent cation can be a divalent cation, such as a magnesium or a calcium cation.

Advantageously, the dicarboxylic acid salt is a calcium salt.

The carboxylic acid can have all its acid groups neutralized with said cations or can be only partially neutralized.

The carboxylic acid can have its acid groups neutralized with a single type of cation or with different cations.

Advantageously, the carboxylic acid or salt thereof is formic acid, acetic acid, propionic acid, oxalic acid or a salt thereof, preferably formic acid or calcium formate.

The carboxylic acid or salt thereof acts as a catalyst precursor facilitating the decomposition of the gas-forming agent into oxygen.

The gas-forming agent reacts with the catalyst precursor and forms bubbles that lead to the formation of pores prior to the setting and hardening of the mineral foam.

Compared to catalyst precursors of previous art such as manganese salts (manganese chlorides), it was surprisingly found that the catalyst precursors allow obtaining, at similar fresh and/or dry foam density, one or several of the following benefits:
- similar expansion time (or foaming time);
- similar fresh foam yield stress;
- comparable or even shorter setting time; and/or
- comparable or even higher compressive strength of the set foams.

The carboxylic acid or salt thereof is present in an amount from 0.6% to 2.5% in weight relative to the total dry weight of the cementitious composition.

When its concentration is below 0.6% in weight, there is no improvement of foaming time and/or foam setting time and/or fresh foam yield stress compared to a process without catalyst.

Increasing the carboxylic acid or salt thereof concentration beyond 2% may have a negative impact of some of the foam properties, such as the fresh foam yield stress.

Advantageously, the carboxylic acid or salt thereof is present in an amount from 0.6% to 2% in weight relative to the total dry weight of the cementitious composition.

Advantageously, the cement slurry does not comprise manganese salts.

Advantageously, the cement slurry does not comprise any other catalyst precursor than the carboxylic acid or salt thereof.

The cement slurry used in the process of the invention comprises water.

Advantageously, the total water / dry cementitious composition weight ratio of the cement slurry is from 0.2 to 2.5, preferably from 0.3 to 1.5, more preferentially from 0.3 to 1.

Advantageously, the cement slurry has a yield stress between 20 and 80 Pa measured according to the examples. It allows optimizing the foamability and the behaviour of the foaming slurry during deposition and at rest, prior to the setting of the cement.

### The gas-forming liquid of step (ii)

The gas-forming liquid comprises a gas-forming agent.

Advantageously, the gas-forming agent is hydrogen peroxide, peroxomonosulphuric acid, peroxodisulphuric acid, alkaline peroxides, alkaline earth peroxides, organic peroxide, particles of aluminium or mixtures thereof.

Preferentially, the gas-forming agent is hydrogen peroxide.

In particular, the gas forming agent may be diluted or dissolved in water to form the gas-forming liquid.

Advantageously, the gas-forming liquid added in step (ii) comprises a solution of hydrogen peroxide, a solution of peroxomonosulphuric acid, a solution of peroxodisulphuric acid, a solution of alkaline peroxides, a solution of alkaline earth peroxides, a solution of organic peroxide, a suspension of particles of aluminium or mixtures thereof.

Preferentially, the gas-forming liquid is an aqueous solution, preferably an aqueous solution of hydrogen peroxide.

When hydrogen peroxide is used, its concentration is comprised between 5 to 40 wt. %.

In a preferred embodiment of the present invention, the concentration of hydrogen peroxide is comprised between 5 and 15 wt. %, more preferably between 5 and 8 wt. % of the total weight of gas-forming liquid. More preferentially, the concentration of hydrogen peroxide is below 8 wt. % compared to the total weight of gas-forming liquid.

It was found that the use of low hydrogen peroxide concentrations was beneficial to reduce the average bubble size, which is advantageous to generate foam of high yield stress. Using a low concentration of hydrogen peroxide, which is an aggressive chemical oxidizer, is also beneficial for the safety of the people working to implement the present invention.

The gas-forming liquid may also comprise a viscosity modifying agent.

In particular, the viscosity modifying agent can be a water-soluble polymer.

Preferably, the gas-forming liquid comprises from 0.01 to 0.10 wt. % of a viscosity modifying agent compared to the weight of gas-forming liquid.

The viscosity modifying agent added to the gas-forming liquid may be in particular an organic molecule chosen among anionic bio-based polymer, amphiphilic bio-based polymer and alkali swellable acrylic polymer or mixture thereof.

Anionic bio-based polymers are anionic polymers that contain carbon originating from a renewable plant source. In particular, anionic bio-based polymers suitable for the gas-forming liquid are anionic polymers derived from cellulose, starch or alginate. More particularly, anionic CarboxyMethyl Cellulose, CarboxyMethyl Starch or Alginate are anionic bio-based polymers suitable for the gas-forming liquid of the present invention.

Amphiphilic bio-based polymers are amphiphilic polymers that contain carbon originating from a renewable plant source. In particular, amphiphilic bio-based polymers suitable for the gas-forming liquid of the present invention are amphiphilic polymers derived from cellulose. Methyl Cellulose, MethylHydroxyEthyl Cellulose or HydroxyPropylMethyl Cellulose are amphiphilic bio-based polymers suitable for the gas-forming liquid of the present invention.

Alkali swellable acrylic polymers are copolymers of (meth)acrylic acid with a non-water-soluble ester of said acid.

Preferably, the viscosity modifying agent is an amphiphilic bio-based polymer. More preferably, the viscosity modifying agent is an amphiphilic polymer derived from cellulose. Even more preferably, the viscosity modifying agent is chosen among Methyl Cellulose, MethylHydroxyEthyl Cellulose, HydroxyPropylMethyl Cellulose and mixtures thereof.

Amphiphilic bio-based polymers increase the yield stress of the continuous phase in the foaming slurry and do not affect or may even decrease the bubble size of the foaming slurry. When compared to hydrophilic polymers, these polymers are amphiphilic and can then adsorb onto the surface of the bubbles of the foamed slurry.

By mixing the viscosity-modifying agent and gas-forming agent beforehand, the viscosity-modifying agent is then directly in the vicinity of the nucleating bubbles, stabilizing them rapidly and effectively.

The particular rheological features of the foamed slurry are attributed to the combination of the high yield stress of the continuous phase of the foaming slurry with the efficient stabilization of the bubbles by the viscosity-modifying agent.

This facilitates for instance the application of the foaming slurry onto vertical surfaces, and enables to increase the thickness of a layer of foamed slurry that may be deposited on a wall. Advantageously, a single layer deposited on a support can have a thickness of at least 5 cm and up to 11 cm.

Moreover, using these polymers enables to obtain advantageously a foamed slurry of a density comprised between 80 kg/m³ and 150 kg/m³ while maintaining high yield stress values.

The mixture of step (ii) of the method according to the invention could comprise a retarding agent, an accelerator or any other admixture as defined the European standard NF EN 934-2 of September 2002.

### The foaming slurry obtained after step (ii)

As mentioned above, the cement slurry prepared in step (i) forms after mixing with the gas-forming liquid in step (ii) a foaming slurry, as the gas-forming agent reacts to form gas bubbles in the slurry. After all the gas-forming agent has reacted to form bubbles, a foamed slurry is then left to rest until the cement sets and hardens.

The foaming slurry is obtained after step (ii) of the method according to the invention wherein the gas-forming liquid is added to the cement slurry. From that step onwards, the gas-forming agent reacts and the catalyst precursor, included in the cement slurry, helps the nucleation and growth of the bubbles. The foaming slurry swells continuously until all the gas-forming agent has reacted.

Advantageously, the wet density of the foamed slurry in the fresh state after expansion is comprised between 80 and 150 kg/m³.

### The method of the invention

The method of the invention can be continuous or discontinuous. A continuous process is a process wherein the finished product is elaborated in an uninterrupted manner. A discontinuous process can be a batch process. Advantageously, the process is continuous, i.e. that the cement slurry obtained after step (i) is continuously mixed with the gas-forming liquid comprising the gas-forming agent to obtain a foaming slurry in step (ii).

The foaming slurry is then applied on a support (step iii). The support can be a wall or a hollow support such as a construction comprising at least one cavity, as described in detail below.

In some embodiments, the expansion of the foam is achieved during and/or immediately upon application of the foamed slurry to form a dimensionally stable structure immediately upon application. In such cases, especially when applied on a vertical surface, there is no, or only limited, expansion on the support.

Advantageously, in such embodiments, the slurry is already foamed once applied on the support.

In some embodiments, the expansion of the foam is not completed when the foaming slurry is applied on the support. The foaming slurry still expands on the support after step (iii). In such cases, the foaming slurry is left to expand on the support in an additional step (step iv). Once applied to the support, the foaming slurry can continue to expand allowing e.g. to fill irregular gaps or voids more effectively, to form a foamed slurry.

The process according to the invention for the continuous production of a mineral foam with the application of the foaming slurry on a vertical wall can be implemented with a device as disclosed in WO2019092090.

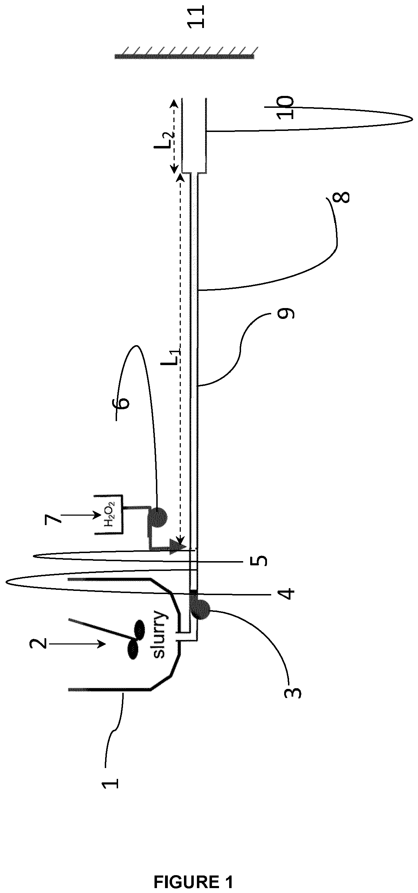

The device thus may comprise a duct (8) which comprises a first section of duct (9) adapted to transport the foaming slurry, with a length L1 and a diameter D1, starting from a point of addition (5) of the gas-forming liquid, and finishing by connecting with a second section of duct (10) with a length L2 and a cross-section D2, which is the outlet of the device (see figure 1).

The cement slurry is prepared by mixing the cementitious composition, the carboxylic acid or salt thereof and water.

Preferably, in step (i), the cement slurry is continuously stirred to avoid any deposition from occurring.

The device may comprise a vessel provided with a stirrer (1) adapted to contain said cement slurry.

In particular, after being prepared, the cement slurry is pumped into a first duct (4).

The device may comprise a first duct (4) and a first pump (3) adapted to pump and transport the cement slurry.

Preferably, the cement slurry is pumped in the first duct (4) with a flow rate comprised between 5 and 35 kg/min.

Preferably, the gas-forming liquid is added to the cement slurry through at least two points of addition. More preferably, the addition of gas-forming liquid to the cement slurry is done by multiple injections, in particular symmetrical double injection.

The multiplicity of the number of injection points is beneficial to the homogeneity of the foamed slurry.

The resulting foaming slurry flows through a second duct (8).

Preferably, the device comprises a device for multiple injections arranged at the point of addition (5) between the first duct (4) and the second duct (8) and adapted to the addition of the gas-forming liquid.

Figure 1 is a diagram illustrating an exemplary embodiment of a device for implementing the method according to the invention.

In the example shown in figure 1, the device comprises a vessel provided with a stirrer (1), a first pump (3), a first duct (4), a point of addition (5), a second pump (6), a recipient (7), a second duct (8) comprising a first section (9) and a second section as exit point element (10). The mixture (2) is the cement slurry and is contained in the vessel (1). The gas-forming liquid is contained in the recipient (7). The cement slurry and the gas-forming liquid are continuously pumped independently by the pumps (3) and (6) and the gas-forming liquid is added and mixed to the cement slurry by multiple injection. The dimensions (L1) and (D1) of the first section of the duct (9) and the dimensions (L2) and (D2) of the outlet element (10) are chosen in such a way that the head losses in the duct remain compatible with the characteristics of the discharges, such as the flow rates and the speeds at the exit point of the duct, and with the pumping means. The first section of the duct (9) and the outlet element (10) are also chosen as a function of the speed of release of oxygen in the duct, and in particular the ratio between the expected release in the duct and that expected after the outlet of the duct, and the regularity of the flow.

Advantageously, the foaming slurry at the outlet of the exit point element (10) is fully expanded, i.e. is already a foamed slurry. Thus, it is a foamed slurry which is applied on the wall (11).

Other embodiments of a device for applying the method according to the invention may be envisaged.

### Mineral foam according to the invention

Another object of the invention is the mineral foam obtained or obtainable according to the method as described above.

It may be noted that the density of the foamed slurry, i.e. in the fresh state (wet density), differs from the density of the mineral foam in the dry state, that is, after setting and drying (density of hardened material). The density of the foamed slurry in the fresh state is always greater than the density of the foam in the dry state.

The invention has the benefit of providing a mineral foam with considerable lightness. Advantageously, the mineral foam has a density in the dry state from 50 to 200 kg/m³, preferentially from 60 to 170 kg /m³, more preferentially from 70 to 150 kg/m³

Moreover, the mineral foam of the invention has excellent isolation properties, in particular a low thermal conductivity.

Advantageously, the mineral foam obtained with the method of the invention has a thermal conductivity comprised from 0.03 to 0.5 W/(m.K), preferably from 0.04 to 0.15 W/(m.K), more preferentially from 0.04 to 0.10 W/(m.K).

The invention has also the benefit of providing a mineral foam having good mechanical properties, and notably good compressive strength.

Advantageously, the mineral foam has a compressive strength comprised from 30 kPa to 5000 kPa after 28 days, preferably from 30 kPa to 2 000 kPa after 28 days, more preferentially from 30 kPa to 1 000 kPa after 28 days.

Additionally, the mineral foam obtained with the method of the invention has an excellent stability. Notably, the bubbles in the mineral foam in the fresh state are largely preserved after pouring into a mould or depositing on the support.

### The support coated with mineral foam

The invention also relates to a support coated by the method according to the invention.

The support may be a wall or a hollow support such as a construction comprising at least one cavity.

Advantageously, the support is a wall coated with at least one layer of mineral foam or a construction, whose at least one cavity is filled with the mineral foam.

Advantageously, the support can be coated by the method of the invention with at least one layer of mineral foam, wherein the thickness of said one layer is of at least 4 cm, preferably of at least 5 cm, more preferably of at least 6 cm.

Preferably, the layer of mineral foam of the invention has a thickness comprised between 2 and 10 cm, more preferably between 4 and 7 cm, even more preferably between 5 and 6 cm.

It is important to underline that the thickness of the mineral foam is not significantly different to the thickness of the foamed slurry.

The support may be of different natures and different shapes.

The support may be a receptacle to fill. In this case, it is envisaged to fill building blocks with the mineral foam according to the invention. For example, they may be building blocks, terra cotta blocks, cellular concrete blocks that are to be filled with the mineral foam according to the invention.

The support may be a wall to cover with mineral foam of the invention. For example, it may be a concrete cast wall, a shuttered concrete, a wall of building blocks, a wall of terra cotta blocks, a wall of cellular concrete blocks, a wall covered with mortar or render.

In the present invention, the term "wall" refers to any surface that is at an angle of between 0° and 20° with the direction of the force of gravity.

The support may be of different natures such as concrete, terracotta, plaster, untreated wood, plasterboard, cardboard sheet, or any other material used in building.

The support may be treated before deposition of the foam. The treatment could for example consist in one or more projections of water, the projection of setting accelerator solutions such as aluminium sulphate, or the treatment could consist in the deposition of bonding primers, or any other solution of physical or chemical nature making it possible to accelerate the setting of the cement at the interface between the support and the mixture, or to enable better long term adhesion of the mixture on the support or to increase the roughness of the support.

The support preferably comprises at least one framework or structural element. This framework may be made of concrete (columns/beams), metal (uprights or rails), wood, plastic or composite material or synthetic material. The mineral foam according to the invention may also coat a structure for example of wire mesh type (plastic, metal) or a pillar or beam of a building.

When the support is a wall, said wall could be provided with elements which facilitate the adherence of the foam, for example metal wire meshes or wire meshes based on plastic materials, spaced or not from the wall, and integral or not with the wall. Vertical armatures could be positioned along the wall to serve as anchoring points for wire meshes. These wire meshes could be simple horizontal wires.

Advantageously, the support may be coated with the method of the invention by blinding or filling of an empty or hollow space of a building, a wall, a partition, a masonry block for example a breeze-block, a brick, of a floor or of a ceiling. Such materials or composite building elements comprising the mineral foam according to the invention are also coated support of the invention per se.

Advantageously, the support may be coated with the method of the invention by the façade covering, for example to insulate a building from the outside. In this case, the support may be further coated with a finish coat.

The mineral foam can be part of an External Thermal Insulation Composite Systems (ETICS) comprising, starting from the substrate and in that order:
- an adhesive or adhesive bed, possibly with additional mechanical fixing or anchoring to dissipate loads;
- the mineral foam for thermal insulation;
- a base coat together with reinforcement to absorb surface tensions and mechanical stresses;
- and a protective layer or finishing coat for weather protection against UV radiation or rain or to provide a visual design element.

The coating of the support of the invention may happen onto walls on a worksite.

In some embodiments, the support can comprise at least a complex cavity. A complex cavity is a cavity with a complex geometry and/or a cavity having singular point(s). The complex geometry or singular point may notably result from variation of inner thickness of the cavity, variation of dimensions of the cavity, surface ruggedness of the cavity, and combinations thereof.

The cavity can be open or closed. The cavity is preferably open. In case the cavity is closed, at least one opening is created to fill the mineral foam within the cavity and let air through. It is understood that the present process is relevant for construction technical field, in particular building or other masonry construction. The construction technical field includes precast.

The present method is also relevant for residential or industrial device, in particular a jacketed device, such as double envelopes in thermally insulated residential and industrial devices such as water boilers.

The cavity will thus be a cavity which can be found in this technical field, and especially a cavity in a construction or in a building. The method is particularly relevant for:
- constructions such as double masonry wall, pre-walls, cavities around a window frame or motorised shutters;
- 3D-printed construction, such as a 3D-wall or any 3D-element of construction;
- building blocks including terra cotta blocks and cellular concrete blocks;
- jacketed device, such as double envelopes in thermally insulated devices, insulating part of a water boiler.

In the present invention, the term "masonry" refers to constructions involving materials such as concrete, clay, stone or rock, plasterboard, terracotta, cardboard sheet, untreated wood, any other material used in building, as well as mixtures thereof.

Of course, the construction element may have a plurality of cavities.

The cavity can be an empty or hollow space of a building, of a wall, a partition, a window frame, a masonry block for example a breeze-block, a brick, of a floor or of a ceiling.

The cavity can be an empty or hollow space in a 3D printed construction, notably in a 3D printed wall, or a rugged surface in a 3D-printed element.

The cavity can be an empty or hollow space in a jacketed device, such as double envelopes in thermally insulated devices, cavity within insulating part of a water boiler. Here again a plurality of cavities can be present.

The typical singular points in the cavity can be one or many of the following examples: the tubes for electrical, the plumbing tubes, attachment point for motorised shutters, switches, the regular unevenness of 3D printed walls, rugged surface. In particular, 3D printed constructions, such as 3D printed walls, are formed by depositing successive ribbons of construction material onto each other. Such a method leads to a construction which may contain one or many cavities of irregular shape.

### Use of the support coated according to the invention

The invention also relates to the use of the support coated by the method of the invention with at least one layer of mineral foam as building material. For example, the coated support may be a wall, a floor, or a roof on a worksite. It is also envisaged to produce elements prefabricated in a precast factory from the foam according to the invention such as blocks or panels.

The invention also relates to the use of the support coated by the method of the invention with at least a layer of mineral foam for insulation, in particular for thermal or phonic insulation.

Advantageously, it is possible in certain cases to replace glass wool, asbestos or insulants made of polystyrene and polyurethane with the mineral foam obtained with the method of the invention.

Thus, the invention offers as other advantage that the mineral foam obtained with the method of the invention has excellent thermal properties, and notably a very low thermal conductivity. Reducing the thermal conductivity of building materials is highly desirable since it makes it possible to obtain a saving in heating energy in residential or working buildings. In addition, the mineral foam obtained with the method of the invention makes it possible to obtain good insulation performances over small thicknesses and thus to preserve the surfaces and habitable volumes. The thermal conductivity (also called lambda (λ)) is a physical quantity characterizing the behavior of materials during the transfer of heat by conduction. The thermal conductivity represents the quantity of heat transferred per surface unit and per time unit under a temperature gradient. In the international units system, the thermal conductivity is expressed in watts per Kelvin meter, (W·m⁻¹·K⁻¹). Classical or traditional concretes have a thermal conductivity between 1.3 and 2.1 measured at 23°C and 50 % relative humidity.

The support coated according to the invention is advantageously capable of withstanding or reducing air and thermo-hydric transfers, that is, it has a controlled permeability to air and water in the form of vapour or liquid.

The support coated according to the invention may be used to produce or manufacture a cladding, an insulation system, or a partition, for example a separating partition, internal partition or a rigid wall lining.

### Use of the catalyst precursor according to the invention

Another object of the invention is the use of a carboxylic acid or salt thereof selected from the group consisting of monocarboxylic acids comprising from 1 to 5 carbon atoms, dicarboxylic acids comprising from 2 to 5 carbon atoms and mixtures thereof, as a catalyst precursor for facilitating the decomposition of a gas-forming agent in order to form a mineral foam.

The mineral foam can be formed according to a method comprising contacting a cement slurry comprising:
- a cementitious composition;
- said carboxylic acid or salt thereof; and
- water;
with a gas-forming liquid comprising a gas-forming agent.

Advantageously, the carboxylic acid or salt thereof is present in an amount from 0.6% to 2.5% in weight relative to the total dry weight of the cementitious composition.

The carboxylic acid or salt thereof, the cementitious composition, the gas-forming liquid, the method to form the mineral foam are as described above.

### EXAMPLES

### METHODS

### Method for measuring a wetting or contact angle:

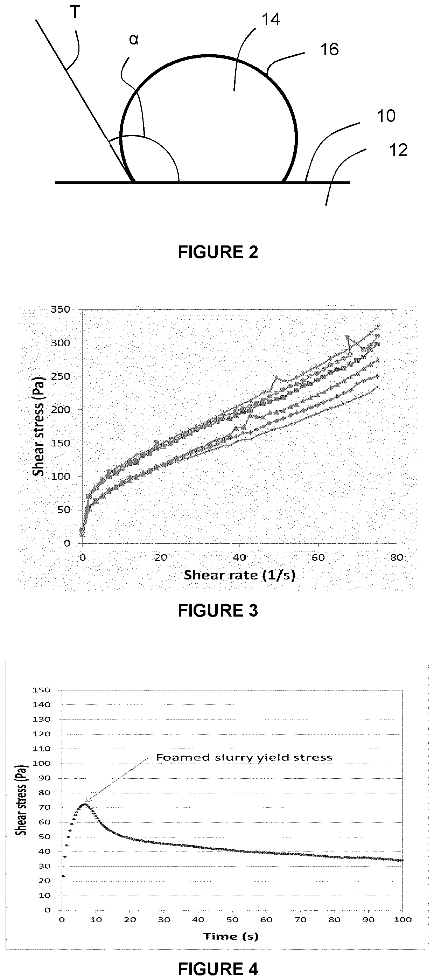

Figure 2 illustrates the principle for measuring a wetting angle between a solid surface 10 of a sample 12 made of concrete and a drop 14 of a liquid deposited on the surface 10. The reference 16 designates the liquid/gas interface between the drop 14 and ambient air. Figure 2 is a cross-section along a plane perpendicular to the surface 10. In the section plane, the wetting angle α corresponds to the angle, measured from the inside of the drop 14 of liquid, between the surface 10 and the tangent T to the interface 16 at the point of intersection between the solid 10 and the interface 16.

To carry out the measurement of the wetting angle, the sample 12 is placed in a room at a temperature of 20°C and a relative humidity of 50 %. A drop of water 14 having a volume of 2.5 µL is placed on the surface 10 of the sample 12. The angle measurement is carried out by an optical method, for example using a drop shape analysis device, for example the DSA 100 device commercialised by Krüss. The measurements are repeated five times and the value of the contact angle measured between the drop of water and the support is equal to the average of these five measurements.

### Method for measuring the particle size distribution

The particle size distributions of the different powders are obtained from a Mastersizer 2000 (year 2008, series MAL1020429) type laser particle size analyser sold by the Malvern Company.

The measurement is carried out in an appropriate medium (for example, in aqueous medium) in order to disperse the particles. The luminous source is constituted of a red He-Ne laser (632 nm) and a blue diode (466 nm). The optical model is that of Fraunhofer, the calculation matrix is of polydisperse type.

### Method for measuring the BLAINE specific surface area

The specific surface of the different materials is measured as follows.

The Blaine specific surface area is measured at 20°C with a relative humidity not exceeding 65 % using a Blaine Euromatest Sintco apparatus complying with the European standard EN 196-6.

Before the measurement of the specific surface, the wet samples are dried in an oven until a constant weight is obtained at a temperature from 50 to 150°C (the dried product is next ground to obtain a powder of which the maximum size of the particles is less than or equal to 80 µm).

### Method for measuring the yield stress of the cement slurry

The rheology measurement of the cement slurry is done with a rheometer (Anton Paar RheolabQC) with a double-helix ribbon geometry after 30 minutes after the first contact between water and premix. The protocol used is:
- pre-shearing at 50 s⁻¹
- Ramp from 0.01 to 75 s⁻¹
- Ramp from 75 to 0.01 s⁻¹.

An example of the result is shown on figure 3. Each curve represents of cement slurry preparation.

The rheological measurement provides a curve of the shear rate as a function of shear stress. The analysis of that curve enables to determine the yield stress: the yield stress corresponds to the Y-intercept of the linear part of the curve, wherein the linear part is typically in the range of 20 to 60 s⁻¹.

### Method for measuring the wet density (or fresh density) of the foamed slurry

The foamed slurry is poured into a cylinder 11x22cm i.e. with a known volume. The density of the foamed slurry is the ratio between the mass of the foamed slurry filling the cylinder and the volume of the cylinder. The weight of the foamed slurry is measured 1-5 minutes after the foaming.

### Method for measuring the yield stress of the foamed slurry

The rheology measurement of the foamed slurry is done with a rheometer (Anton Paar RheolabQC) with a vane shear blade geometry (40x55mm) 5 minutes after the foaming. A displacement of 1tr/s with 0.5s between each point is applied to the foamed slurry poured in a cylinder 11x22cm. The foamed slurry yield stress corresponds to the maximum of the shear stress and describes the transition from elastic behaviour to a plastic state of the material as shown on figure 4.

### Method for measuring compressive strength

Compressive strength is measured following the protocol given in EN 826 (2013).

### Method for measuring total foaming time or total expansion time and foam setting time

A 11x22cm (diameter×height) cylinder is filled with 400mL of slurry cement prepared according to example 1. The slurry is left under stirring at 1000 rpm. The gas-forming liquid disclosed example 2 is poured into the cylinder within 3 seconds and then the agitation is stopped. The foaming slurry starts its expansion and finishes its expansion outside the cylinder.

To determine the total expansion time the following method is implemented:
- a chronometer is started after introducing the gas-forming liquid, once the agitation is stopped.
- when the foaming slurry finishes its expansion outside the cylinder the chronometer is stopped. This time is called the total expansion time.

The foam setting time is determined by introducing approximately 20g of the foamed slurry into a Calmetrix I-Cal 8000 HPC Isothermal Calorimeter immediately after foaming. The heat released during hydration is recorded for a minimum of 24 hours. The foam setting time is defined as the time at which the main hydration peak occurs.

### Example 1: Preparation of the cement slurry

The cement slurry is prepared by mixing the components in the respective proportions given in table 1 below.

**Table 1:**

| Components | Formulation (wt. %*) |
|---|---|
| Premix** | 77.5 |
| MnCl₂ or Carboxylic acid or Carboxylate salt | The amount differs according to the formulations (see Tables 3 and 4) |
| Fibres*** | 0.06 |
| Water | Qsp 100 |
| Total | 100 |

| | |
|---|---|
| *the values are expressed as percentages in weight by total weight of cement slurry. **the premix is composed of 95.5 wt. % of cement CEM II/B-M (T-LL) from Holcim (Süddeutschland) GmbH and 4.0 wt. % of Socal 312 from Imerys and 0.5 wt. % of superplasticizer Sika Viscocrete 150P. The cement CEM II/B-M (T-LL) is an ultrafine cement having a Blaine Value of 8010 cm/g². ***the fibres are Ignis monofilament polypropylene fibres with a length of 6mm and a diameter of 18µm. The producer is Adfill Construction fibres. | |

The premix and the fibres represent the cementitious composition. All the components of the cementitious composition are solid components.

The cement slurry is mixed with a bench agitator (Supertest VMI) with defloculating blade according the following protocol:
- Pouring the water in the tank
- Pouring slowly all powders (premix and catalyst) and fibres into the tank during 2 minutes with an agitation speed of 900 rpm.
- Mixing vigorously during 3 minutes.

### Example 2: Preparation of the gas-forming liquid

The gas-forming liquid is prepared by mixing the components of the table 2 in the respective proportions given in the table.

**Table 2:**

| Components | Formulation (wt. %)* |
|---|---|
| H₂O₂ | 7.90 |
| Amphiphilic polymer (Walocel MKW 4000 PF produced by Dow) | 0.035 |
| Water | 92.065 |

| | |
|---|---|
| *the values are expressed as percentages in weight by total weight of gas-forming liquid. | |

### Example 3: Mineral foams

The following mineral foams are prepared (formulations as indicated in Tables 3 and 4).

FT1 is a control mineral foam manufactured by mixing the cement slurry of example 1 with 0 wt. % of catalyst and the gas-forming liquid of example 2.

FC1/2/3 are comparative mineral foams manufactured by mixing the cement slurry of example 1 with MnCl₂ at different weight ratios of MnCl₂ / dry cementitious composition and the gas-forming liquid of example 2.

FC4 is a comparative mineral foam manufactured by mixing the cement slurry of example 1 with calcium formate at a weight ratio of calcium formate / dry cementitious composition of 0.5 and the gas-forming liquid of example 2.

F1/F2/F3 are mineral foams of the invention manufactured by mixing the cement slurry of example 1 with calcium formate at a weight ratio of calcium formate / dry cementitious composition respectively of 1/1.5/2 and the gas-forming liquid of example 2.

F4/F5/F6/F7 are mineral foams of the invention manufactured by mixing the cement slurry of example 1 with different catalysts at a weight ratio of catalyst / dry cementitious composition close to 1 and the gas-forming liquid of example 2.

**Table 3:**

| Formulation | Type of catalyst | wt.% catalyst vs cementitious composition | Total expansion time (s) | Fresh density (kg/m3) | Foam yield stress (Pa) | Foam setting time (h) |
|---|---|---|---|---|---|---|
| FT1 | None | 0 | 108 | 136 | 54 | 14 |
| FC1 | MnCl₂, 1H₂O | 0.3 | 59 | 120 | 109 | 12.5 |
| FC2 | MnCl₂, 1H₂O | 0.5 | 47 | 118 | 133 | 11.5 |
| FC3 | MnCl₂, 1H₂O | 0.7 | 42 | 117 | 118 | 11 |
| FC4 | Ca(HCOO)₂ | 0.5 | 101 | 130 | 63 | 14 |
| F1 | Ca(HCOO)₂ | 1 | 65 | 125 | 109 | 10 |
| F2 | Ca(HCOO)₂ | 1.5 | 56 | 125 | 135 | 9 |
| F3 | Ca(HCOO)₂ | 2 | 45 | 133 | 91 | 7 |

| | | | | | | |
|---|---|---|---|---|---|---|
| Effect of manganese chloride and calcium formate as catalysts on fresh foam properties | | | | | | |

Fresh mineral foams F1/F2/F3 according to the invention exhibit, at comparable fresh density, shorter expansion time, higher foam yield stress and shorter setting time compared to formulation FT1 (without catalyst) and formulation FC4 (with a weight ratio of calcium formate / dry cementitious composition of 0.5).

Fresh mineral foams F1/F2/F3 according to the invention exhibit, at comparable fresh density, similar expansion time and similar foam yield stress, compared to respective formulations FC1/FC2/FC3 with manganese chloride as catalyst. Fresh mineral foams F1/F2/F3 exhibit shorter setting time.

Increasing the amount of calcium formate allows shortening expansion time and setting time. Foam yield stress increases up to a weight ratio of calcium formate / dry cementitious composition of 1.5. At a weight ratio of calcium formate / dry cementitious composition of 2, foam yield stress is lowered.

The effect of the type of carboxylic acid on hardened foam properties is illustrated in Table 4.

**Table 4:**

| Formulation | Type of catalyst | wt.% catalyst vs cementitious composition | Density after 7 days at 23°C/50%HR (kg/m³) | Compressive strength (kPa) |
|---|---|---|---|---|
| FT1 | None | 0 | 115.8 | 40.6 |
| F1 | Calcium formate | 1 | 99.6 | 41.0 |
| F4 | Formic acid | 0.71 | 102.3 | 48.7 |
| F5 | Oxalic acid | 0.68 | 96.8 | 42.8 |
| F6 | Acetic acid | 0.9 | 103.3 | 54.3 |
| F7 | Propionic acid | 1.13 | 100.1 | 61.5 |

| | | | | |
|---|---|---|---|---|
| Effect of carboxylic acid type on hardened foam properties | | | | |

Hardened mineral foams F4/F5/F6 and F7 according to the invention exhibit similar hardened density compared to formulation F1 and comparable with Formulation FT1 without catalyst.

Hardened mineral foams F4/F5/F6 and F7 according to the invention exhibit similar compressive strength compared to formulation F1 and Formulation FT1 without catalyst.

Corresponding fresh mineral foams F4/F5/F6 and F7 (i.e before hardening) exhibit similar characteristics (expansion time, foam yield stress, setting time and fresh density) compared to fresh mineral foam formulation F1.

## Claims

**1.** A method for the production of a mineral foam comprising the following steps:
(i) preparing a cement slurry, comprising:
- a cementitious composition;
- a carboxylic acid or salt thereof selected from the group consisting of monocarboxylic acids comprising from 1 to 5 carbon atoms, dicarboxylic acids comprising from 2 to 5 carbon atoms and mixtures thereof; and
- water;
wherein the carboxylic acid or salt thereof is present in an amount from 0.6% to 2.5%, preferably from 0.6% to 2%, in weight relative to the total dry weight of the cementitious composition,
(ii) adding to the cement slurry obtained after step (i) a gas-forming liquid comprising a gas-forming agent to obtain a foaming slurry;
(iii) applying the foaming slurry obtained in step (ii) on a support.

**2.** The method according to claim 1, wherein the cementitious composition comprises cement and admixtures selected in the group consisting of a mineral addition, ultrafine particles of which the D50 is comprised from 10 to 600 nm, fibres, a water reducing agent and their mixtures.

**3.** The method according to any of the preceding claims, wherein the carboxylic acid or salt thereof is formic acid, acetic acid, propionic acid, oxalic acid or a salt thereof, preferably formic acid or calcium formate.

**5.** The method according to any of the preceding claims, wherein the mineral foam has a density in the dry state from 50 to 200 kg/m³, preferentially from 60 to 170 kg /m³, more preferentially from 70 to 150 kg/m³.

**6.** The method according to any of the preceding claims, wherein the cement of the cementitious composition is a CEM I Portland cement, preferentially having a Blaine specific surface area above 5000 cm²/g.

**7.** The method according to any of the preceding claims, wherein the gas-forming liquid added in step (ii) comprises the gas-forming agent in a concentration of less than 15 wt.% of the weight of the gas-forming liquid, preferably less than 8 wt.%.

**8.** The method according to any of the preceding claims, wherein the gas-forming liquid added in step (ii) comprises a solution of hydrogen peroxide, a solution of peroxomonosulphuric acid, a solution of peroxodisulphuric acid, a solution of alkaline peroxides, a solution of alkaline earth peroxides, a solution of organic peroxide, a suspension of particles of aluminium or mixtures thereof, preferably it is a solution of hydrogen peroxide.

**9.** The method according to any of the preceding claims, wherein the gas-forming liquid added in step (ii) further comprises a viscosity-modifying agent, preferably an amphiphilic bio-based polymer, more preferably chosen among methyl cellulose, methylhydroxyethyl cellulose and hydroxypropylmethyl cellulose.

**10.** The method according to any of the preceding claims, wherein the method is continuous.

**11.** The method according to any of the preceding claims, wherein the support in step (iii) is a wall or a hollow support such as a construction comprising at least one cavity.

**12.** Use of a carboxylic acid or salt thereof selected from the group consisting of monocarboxylic acids comprising from 1 to 5 carbon atoms, dicarboxylic acids comprising from 2 to 5 carbon atoms and mixtures thereof, as a catalyst precursor for facilitating the decomposition of a gas-forming agent in order to form a mineral foam.

**13.** The mineral foam obtained or obtainable according to any of claims 1 to 11

**14.** A support coated by the method of claim 11, said support being a wall coated with at least one layer of mineral foam or a construction, whose at least one cavity is filled with mineral foam.

**15.** Use of the support coated according to claim 14 for insulation, in particular for thermal or phonic insulation.
